# EUROPÄISCHE PATENTSCHRIFT

(11) **EP 2 971 385 B1**
(45) Veröffentlichungstag und Bekanntmachung des Hinweises auf die Patenterteilung: **15.03.2017**
(21) Anmeldenummer: 14703776.6
(22) Anmeldetag: 07.02.2014
(51) Int. Cl.: E03C 1/084, G05D 7/01

(54) **STRAHLREGLER UMFASSEND EINE PRALLFLÄCHE MIT RINGWANDUNGEN**
FLOW REGULATOR HAVING BAFFLE WITH RING-LIKE WALLS
REGULATEUR DE DEBIT AYANT UN DEFLECTEUR AVEC PAROIS ANNEAUX

(30) Priorität: 11.03.2013 DE 202013002282 U
(43) Veröffentlichungstag der Anmeldung: 20.01.2016
(73) Patentinhaber: Neoperl GmbH, 79379 Müllheim (DE)
(72) Erfinder: TEMPEL, Marc, 79111 Freiburg (DE)
(74) Vertreter: Börjes-Pestalozza, Henrich
(86) Internationale Anmeldenummer: PCT/EP2014/000343
(87) Internationale Veröffentlichungsnummer: WO 2014/139618

(56) Entgegenhaltungen:
- WO-A1-2013/004181
- DE-U1-202010 007 835
- FR-A1- 2 677 687
- NL-C- 122 340
- US-A- 2 998 928
- US-A- 3 363 841
- US-A- 3 851 825

## Beschreibung

Die Erfindung betrifft einen Strahlregler mit einem Strahlreglergehäuse, in dessen Gehäuseinnenraum eine Lochplatte mit einer Mehrzahl von Durchflusslöchern zum Aufteilen des durchströmenden Wassers vorgesehen ist, wobei die Lochplatte eine zentrale, lochfreie Prallfläche hat, die zumindest von einer Ringwandung umgrenzt ist, wobei die Ringwandung in radialer Richtung orientierte Durchtrittsöffnungen aufweist und auf der in der Prallflächenebene angeordneten Seite der Durchtrittsöffnungen jeweils ein mit den Durchtrittsöffnungen verbundenes Durchflussloch durch die Lochplatte vorgesehen und die Ringwandung außenumfangsseitig von einem ringförmigen Ringraum umschlossen ist.

Ein derartiger Strahlregler ist in der älteren deutschen Patentanmeldung 10 2012 021 361.1 beschrieben und hat sich bewährt.

Bei diesem Strahlregler ist die Wasserdurchflussmenge proportional dem anstehenden Wasserdruck, so dass bei einem hohen Druck sehr viel und gegebenenfalls zu viel Wasser durch den Strahlregler hindurchfließen kann, also der Wasserverbrauch ungünstig wird.

Aus der US 3 851 825 A ist bereits ein Strahlregler vorbekannt, der ein hülsenförmiges Strahlreglergehäuse hat, welches an seinem zuströmseitigen Außenumfangsrand ein Außengewinde trägt, mit dem das Strahlreglergehäuse an einem im Wasserauslauf einer sanitären Auslaufarmatur innenumfangseitig vorgesehenen Innengewinde verschraubt werden kann. Der vorbekannte Strahlregler weist einen plattenförmigen Strahlzerleger auf, der auf seiner Zuströmseite konzentrisch zueinander angeordnete Ringwandungen trägt, die in radialer Richtung orientierte Durchtrittsöffnungen durchsetzen, welche sich mit in axialer Richtung orientierten und den plattenförmigen Strahlzerleger durchsetzenden Durchflusslöchern kreuzen. In diesen Durchflusslöchern wird das anströmende Wasser in eine Vielzahl von Einzelstrahlen unterteilt. Da die Durchflusslöcher eine Querschnittsverengung des Durchflussquerschnittes darstellen, erfahren die Einzelstrahlen in diesen Durchflusslöchern eine Geschwindigkeitserhöhung, die auch durch die nachfolgend angeordneten und die Auslaufstirnseite des vorbekannten Strahlreglers bildenden Metallsiebe kaum noch reduziert wird.

Es besteht deshalb die Aufgabe, einen Strahlregler der eingangs definierten Art zu schaffen, bei welchem die Vorteile eines gut belüfteten Wasserstrahls möglich sind, ohne dass bei höherem Druck eine zu große Wassermenge hindurchfließt.

Diese Aufgabe wird mit den Mitteln und Merkmalen des Anspruches 1 gelöst.

Erfindungsgemäß ist der eingangs definierte Strahlregler dadurch gekennzeichnet, dass in Strömungsrichtung des Wassers vor oder über der Prallfläche eine Drosseleinrichtung und/oder ein Mengenregler mit Durchflussöffnung vorgesehen ist und dass die Prallfläche eine innerhalb der ersten Ringwandung radial zu dieser beabstandete zweite Ringwandung geringeren Durchmessers aufweist, wobei der Strahlregler derart eingerichtet ist, dass von der Drosseleinrichtung und/oder dem Mengenregler kommendes Wasser auf die Prallfläche auftrifft und die zweite Ringwandung bis zu einer Höhe ausfüllt, bevor es radial in einen Zwischenraum zwischen der ersten Ringwandung und der zweiten Ringwandung abfließt und anschließend in die Durchflusslöcher eintritt und durch diese abfließt.

Einem zu großen oder erhöhten Wasserverbrauch wird also erfindungsgsgemäß mit einer in den Strahlregler integrierten Drosseleinrichtung oder einem Mengenregler entgegengewirkt, wobei diese Einrichtungen einen an sich bekannten Aufbau haben können, wonach nämlich die Drosseleinrichtung und/oder der Mengenregler eine hinsichtlich der Durchlassmenge begrenzende Durchlassöffnung haben. Die durch einen Drosseleinrichtung hindurchtretende Wassermenge ist gedrosselt und die durch einen Mengenregler hindurchtretende Wassermenge ist sogar ganz oder weitgehend unabhängig von dem jeweils vorhandenen Wasserdruck, so dass unabhängig von diesem jeweiligen Wasserdruck eine etwa gleichbleibende oder jedenfalls nicht dem Wasserdruck proportionale Wassermenge hindurchtreten kann. Während eine Drosseleinrichtung die Wassermenge jeweils drosselt, kann also ein Mengenregler den Wasserverbrauch auch bei höheren Drücken noch effektiver vermindern oder einschränken.

Die Durchlassöffnung der Drosseleinrichtung oder des Mengenreglers kann einen vorgewählten oder vorbestimmten Durchlassquerschnitt aufweisen, der bei der Drosseleinrichtung die Drosselwirkung bestimmt und/oder bei dem Mengenregler durch einen oberhalb befindlichen, mittels Wasserdruck verformbaren Dichtring oder O-Ring selbsttätig oder automatisch auf eine Durchlassmenge einstellbar ist. Derartige Mengenregler sind an sich bekannt und ihre Durchlassöffnüng ist dabei in der Regel durch ringförmig angeordnete Einzelöffnungen gebildet, zwischen denen Haltestege verlaufen, was in gleicher Weise auch bei einer Durchlassöffnung für eine Drosseleinrichtung der Fall sein kann. Somit hat die Durchlassöffnung einen im Wesentlichen kreisringförmigen Verlauf um die Längsmittelachse des Strahlreglers, so dass ein entsprechend gleichmäßig über einen Kreisring verteilter Wasserfluss möglich ist.

Die zweite Ringwandung kann in Strömungsrichtung hinter oder unterhalb der Durchlassöffnung gesehen in radialer Richtung außerhalb der koaxialen Projektion dieser Durchlassöffnung angeordnet sein.

Dabei ist es vorteilhaft, wenn die zweite Ringwandung mit Abstand oberhalb der Prallfläche angeordnete radiale Durchtrittsöffnungen oder einen parallel zur Prallfläche verlaufenden, von dem Wasser überströmbaren Rand aufweist.

Somit kann das von der erfindungsgemäß vorgesehenen Drosseleinrichtung oder dem Mengenregler hinsichtlich seiner Menge geregelte Wasser auf die Prallfläche auftreffen und dann die erfindungsgemäß vorgesehene zweite Ringwandung zunächst bis zur Höhe von deren Durchtrittsöffnungen oder von deren oberen Rand ausfüllen und aufgrund des nachströmenden Wassers dann in den Zwischenraum zwischen den beiden Ringwandungen gelangen und dort in die Durchtrittsöffnungen und über die erste Ringwandung fließen, so dass das Wasser von beiden Seiten in die Durchtrittsöffnungen und von dort in die Durchflusslöcher gelangt und einen regelmäßigen abfließenden Strahl bildet, der mit Umgebungsluft vermischt werden kann. Dabei erhält man am Auslauf dieses Strahlreglers auch bei unterschiedlichen Wasserdrücken immer weitgehend dieselbe oder zumindest eine gedrosselte Wassermenge.

Damit das zufließende Wasser in die Durchtrittsöffnungen der äußeren, ersten Ringwandung möglichst von beiden Seiten etwa mit gleichem Druck eintritt und sich dann innerhalb dieser Durchtrittsöffnungen soweit neutralisiert, dass es etwa vertikal nach unten durch die Durchflusslöcher abfließen kann und einen weitgehend gleichmäßigen vertikalen, abwärts gerichteten Strom bildet, kann der außerhalb der ersten Ringwandung befindliche Ringraum in seinem Verlauf um die erste Ringwandung herum bereichsweise derart eingeengt sein, dass sich in Umfangsrichtung in radialer Richtung schmalere und breitere Bereiche abwechseln. Das die erste Ringwandung überströmende Wasser kann dadurch hinsichtlich seiner Menge und Fließgeschwindigkeit so beeinflusst werden, dass es mit dem gewünschten Druck von der Außenseite der ersten Ringwandung in die entsprechende Durchtrittsöffnung eintritt, wo es auf das von der Innenseite der Ringwandung kommende Wasser trifft und mit diesem dann gemeinsam durch das entsprechende Durchflussloch nach unten abfließt.

Eine zweckmäßige Ausführungsform kann dabei vorsehen, dass an der Außenseite der ersten Ringwandung Vorsprünge zumindest zwischen einzelnen oder zwischen allen in dieser Ringwandung angeordneten Durchtrittsöffnungen vorgesehen sind, die in radialer Richtung in den Ringraum außerhalb der ersten Ringwandung ragen und somit Verengungen dieses äußeren Ringraumes bilden.

Der Ringraum hat auf diese Weise im Bereich der Durchtrittsöffnungen eine größere Breite und gleichzeitig können die beidseits dieser Durchtrittsöffnungen befindlichen Vorsprünge die Zuleitung des in den äußeren Ringraum gelangten Wassers zu den Durchtrittsöffnungen hin begünstigen.

Für eine möglichst gleichmäßige Weiterleitung des Wassers ist es günstig, wenn die Durchtrittsöffnungen mittig zwischen zwei benachbarten Vorsprüngen angeordnet sind und die Vorsprünge von einer ihnen benachbarten Durchtrittsöffnung jeweils vorzugsweise denselben Abstand haben. Ferner ist es günstig, wenn alle Vorsprünge übereinstimmende Abmessungen und Formen haben. Da das Wasser schon durch die Drosseleinrichtung oder den Mengenregler und deren kreisringförmig wirksame Durchlassöffnung weitgehend konzentrisch zur Längsmittelachse in den Strahlregler gelangt, ist durch die vorbeschriebenen Merkmale und Maßnahmen die Möglichkeit gegeben, dass das Wasser auch an den Ringwandungen und bei dem Eintritt in die Durchtrittsöffnungen jeweils weitgehend gleichmäßig über den Umfang des Strahlreglers verteilt ist und in weitgehend übereinstimmenden Mengen in die Durchtrittsöffnungen gelangen kann. Dabei wirken all diese Maßnahmen dahingehend zusammen, dass mit Hilfe einer Drosseleinrichtung und erst recht mit Hilfe eines erfindungsgemäß vorgesehenen und ausgestalteten Mengenreglers die durch den Strahlregler fließende Wassermenge auch bei höherem Druck begrenzt werden kann.

Die Vorsprünge an der Außenseite der ersten Ringwandung können mit dieser fugenlos oder insbesondere einstückig verbunden sein und die erste Ringwandung vorzugsweise in axialer Richtung entgegen der Strömungsrichtung des zugeführten Wassers überragen. Dadurch tragen diese Vorsprünge dazu bei, dass das die erste Ringwandung überströmende Wasser bereits aufgeteilt und zu den Durchtrittsöffnungen hin geführt wird.

Zweckmäßig kann es sein, wenn die als Stauelemente für das über die erste Ringwandung übertretende Wasser wirkenden Vorsprünge in radialer Richtung etwa ein Drittel der radialen Abmessung der Breite des äußeren Ringraumes einnehmen und an ihrem der ersten Ringwandung abgewandten Ende vorzugsweise kantig oder gegebenenfalls abgerundet sind. Die im äußeren Ringraum angeordneten Vorsprünge können also so gestaltet werden, dass die beidseits der ersten Ringwandung befindlichen und in die Durchtrittsöffnungen eintretenden Wassermengen etwa gleich groß sind.

Für eine gute Wasserverteilung und Zuleitung der geregelten Wassermenge zu den Durchtrittsöffnungen ist es günstig, wenn die unteren Ränder der mit axialem Abstand oberhalb der Prallfläche angeordneten radialen Durchtrittsöffnungen in der zweiten Ringwandung oder der obere Rand der zweiten Ringwandung - mit gegenüber der ersten Ringwandung kleineren Durchmesser - auf gleicher Höhe oder höher als die oberen Begrenzungen der Durchtrittsöffnungen in der ersten Ringwandung angeordnet ist/sind. Diese Maßnahme führt dazu, dass das von der Prallfläche durch die radialen Durchtrittsöffnungen der zweiten Ringwandung fließende Wasser mit ausreichender Sicherheit und in ausreichender Menge überfließt, um dieses Wasser in der gewünschten Weise für den beidseitigen Zutritt zu den Durchtrittsöffnungen der ersten Ringwandung und damit zu den Durchflusslöchern aufzuteilen und eine weitgehend direkte Strömung von der Prallfläche an die Innenseite der ersten Ringwandung zu verhindern. Durch die genannten Maßnahmen kann ein besseres Gleichgewicht der Strömung von innen und von außen in die Durchtrittsöffnungen der ersten Ringwandung und damit in die Durchflusslöcher erreicht werden.

Die unteren Ränder der Durchtrittsöffnungen in der zweiten Ringwandung oder der obere Rand der zweiten Ringwandung und/oder die oberen Begrenzungen der Durchtrittsöffnungen in der ersten Ringwandung können zweckmäßigerweise in einer gemeinsamen oder zwei parallelen rechtwinklig zur Längsmittelachse des Strahlreglers liegenden Ebene angeordnet sein, also weitgehend geradlinig in einer jeweiligen Durchmesserebene verlaufen. Entsprechend gezielt kann die zuströmende Wassermenge aufgeteilt und weitergeleitet werden.

Es wurde bereits erwähnt, dass die erfindungsgemäß vorgesehene zweite Ringwandung dadurch effektiv und wirkungsvoll ist, dass sie in radialer Richtung außerhalb der Projektion der Durchlassöffnung durch die Drosseleinrichtung oder den bezüglich Wassereinsparung besonders wirkungsvollen Mengenregler angeordnet ist.

Dabei kann eine wirksame und zweckmäßige Ausführungsform darin bestehen, dass der an dem Mengenregler in einer Nut mit der Durchlassöffnung angeordnete Dichtring oder O-Ring in axialer Richtung gesehen oberhalb der zweiten Ringwandung insbesondere parallel zu dieser angeordnet ist, dass die Projektion der Durchlassöffnung auf die Prallfläche innerhalb der zweiten Ringwandung angeordnet, dabei die radiale Abmessung der den Dichtring oder O-Ring aufnehmende Nut insbesondere größer als die der zweiten Ringwandung ist und dass die Durchlassöffnung in demjenigen Bereich der Nut angeordnet ist, der die zweite Ringwandung in radialer Richtung nach innen überragt, oder dass die Projektion der Nut mit dem Dichtring oder O-Ring und die Durchlassöffnung auf die Prallfläche innerhalb der zweiten Ringwandung angeordnet sind. Vor allem bei der letzteren Alternative ist es gleichgültig, ob der Dichtring oder O-Ring innerhalb der Nut an deren Außenwand in Ausgangsstellung anliegt und sich die Durchgangsöffnung mehr im inneren Bereich befindet, oder umgekehrt. Der an einer Außenwand einer Nut anliegende Dichtring kann dabei eine größere Effektivität haben, weil sein Durchmesser entsprechend groß ist und er mit einer innenliegenden Durchlassöffnung von entsprechend geringerem Durchmesser zusammenwirken kann.

Durch die vorbeschriebene Anordnung kann sichergestellt werden, dass der zu der Prallfläche gelangende Wasserstrahl innerhalb der zweiten Ringwandung auf diese Prallfläche auftritt und von dort die Strömung nach außen hin durchführen kann. Gleichzeitig kann die Menge dieses Wassers mit Hilfe des Dicht- oder O-Rings je nach Wasserdruck beeinflusst und zumindest weitgehend unabhängig von diesem Wasserdruck gleich groß gehalten oder bei Verwendung einer Drosseleinrichtung zumindest gedrosselt werden.

Die an der zweiten Ringwandung vorgesehenen Durchtrittsöffnungen können jeweils seitliche Begrenzungen aufweisen, die nach oben entgegen der Strömungsrichtung des zugeführten Wassers frei enden. Diese radialen Durchtrittsöffnungen in der zweiten Ringwand können dabei nach oben durch die Unterseite des aufliegenden Mengenreglers oder der aufliegenden Drosseleinrichtung abgeschlossen sein. Somit kann der Mengenregler oder die Drosseleinrichtung noch eine zusätzliche Funktion erhalten, nämlich die Begrenzung der radialen Durchtrittsöffnungen in der zweiten Ringwandung.

Aus der DE 20 2010 007 835 U kennt man bereits einen Durchflussmengenregler, der das pro Zeiteinheit durchströmende Wasservolumen druckunabhängig auf einen festgelegten Maximalwert einzuregeln hat. Dieser Durchflussmengenregler weist ein Reglergehäuse auf, das einen auf den zuströmseitigen Stirnumfangsrandbereich eines abströmseitig nachgeschalteten Strahlreglers und/oder eines Vorsatzsiebes aufsetzbaren Außenumfangsrandbereich hat.

Aus der NL 122 340 C ist bereits ein am Wasserauslauf einer sanitären Auslaufarmatur montierbarer Strahlregler vorbekannt, der einen Strahlzerleger hat, welcher aus zwei, mit Abstand übereinander liegenden Lochplatten gebildet ist. Diese Lochplatten tragen auf ihren Zuströmseiten jeweils eine aus konzentrisch umlaufenden Aus- und Einformungen gebildete Struktur. Da die in diesen Lochplatten vorgesehenen Durchflusslöcher eine Querschnittsverengung darstellen, werden die in diesen Durchflusslöchern erzeugten Einzelstrahlen derart beschleunigt, dass sich auf der Abströmseite des Strahlzerlegers ein Unterdruck bildet, mittels dem die mit den Einzelstrahlen zu durchmischende Umgebungsluft angesaugt wird.

Aus der US 3 363 841 A ist ein Strahlregler vorbekannt, in dessen Strahlreglergehäuse ein plattenförmiger Strahlzerleger vorgesehen ist. Dieser Strahlzerleger weist eine Vielzahl von Durchflusslöchern auf, die auf konzentrischen Kreisbahnen zueinander angeordnet sind. Entlang dieser Kreisbahnen sind auf der Zuströmseite des plattenförmigen Strahlzerlegers Ringwandungen vorgesehen, die im Bereich der Durchflusslöcher jeweils einen in radialer Richtung offenen Wandungsdurchbruch aufweisen. Auch die Durchflusslöcher dieses Strahlzerlegers sollen die in diesen Durchflusslöchern erzeugten Einzelstrahlen derart beschleunigen, dass auf der Abströmseite des Strahlzerlegers ein Unterdruck entsteht, der dort die mit den Einzelstrahlen zu durchmischende Umgebungsluft in das Strahlreglergehäuse saugt.

Es besteht daher auch die Aufgabe, einen Strahlregler zu schaffen, mit dem selbst bei relativ gering gehaltenem Durchfluss des Wassers auch bei höheren Drücken ein ausreichend belüfteter und entsprechend perlend-weicher Wasserstrahl erzeugt werden kann, der dennoch möglichst voluminös erscheint.

Bei einem Strahlregler mit einem Strahlreglergehäuse, in dessen Gehäuseinnenraum eine Lochplatte mit einer Mehrzahl von Durchflusslöchern zum Aufteilen des durchströmenden Wassers vorgesehen ist, von denen zumindest ein Durchflussloch sich wenigstens in einem abströmseitigen Lochabschnitt zu seiner Abströmseite hin kegelförmig oder konisch oder stufenförmig erweitert, sieht die erfindungsgemäße Lösung dieser Aufgabe vor, dass auf der Abströmseite der Lochplatte mit Abstand von dieser eine umlaufende Prallschräge vorgesehen ist, die den lichten Gehäusequerschnitt in diesem Bereich in Strömungsrichtung zunehmend verengt, wobei der Strahlregler derart eingerichtet ist, dass das aus den Durchflusslöchern austretende Wasser auf die Prallschräge auftrifft.

Da zumindest ein Durchflussloch oder alle Durchflusslöcher in der Lochplatte des erfindungsgemäßen Strahlreglers sich wenigstens in einem abströmseitigen Lochabschnitt zu der Abströmseite hin kegelförmig oder konisch oder stufenförmig erweitert/erweitern, kann das durch die Durchflusslöcher fließende Wasser etwa kegelförmig oder konisch aufgespreizt werden, und sich selbst bei relativ geringen Durchflussmengen praktisch über den gesamten Gehäusequerschnitt des Strahlreglergehäuses mit der in dieses Strahlreglergehäuse eingesaugten Umgebungsluft vermischen. Da auf der Abströmseite der Lochplatte mit Abstand von dieser eine umlaufende Prallschräge vorgesehen ist, die den lichten Gehäusequerschnitt in diesem Bereich in Strömungsrichtung zunehmend verengt, trifft das aus den Durchflusslöchern austretende und bereits mit Luft angereicherte Wasser mit Abstand nach oder hinter der Lochplatte auf eine Prallschräge auf, die das bereits derart aufbereitete Wasser zusätzlich vermischt und zerteilt, bevor das derart mit Luft angereicherte Wasser als homogener, nicht-spritzender und perlend-weicher Wasserstrahl aus dem Strahlregler austreten kann.

Dabei wird die gute Luftdurchmischung des durchströmenden Wassers auch bei geringen Durchflussmengen und dem durch den Mengenregler verminderten Wasserdruck zusätzlich begünstigt, wenn zumindest ein Durchflussloch sich wenigstens in einem abströmseitigen Lochabschnitt zu seiner Abströmseite hin derart kegelförmig oder konisch erweitert, dass der aus dem Durchflussloch austretende und durch die Kegelform oder die Konizität sich erweiternde Einzelstrahl oder Sprühstrahl sich im Gehäuseinnenraum vorzugsweise noch vor dem Auftreffen von Einzelstrahlen auf wenigstens ein im Gehäuseinnenraum angeordnetes Strahlformteil mit dem Einzelstrahl wenigstens eines benachbarten Durchflussloches durchmischt.

Eine besonders einfach herstellbare Ausführungsform gemäß der Erfindung kann dabei vorsehen, dass die Prallschräge die Zuströmseite eines Wandungsabschnitt bildet, der als zumindest eine im Längsschnitt wellenförmige Einschnürung ausgebildet oder ausgestaltet ist. Dabei kann die Prallschräge als innenumfangsseitige Ausformung oder innenumfangsseitiger Vorsprung der Gehäuseumfangswandung ausgestaltet und mit dem Strahlreglergehäuse oder einem Strahlreglergehäuseteil einstückig verbunden sein.

Bevorzugt wird jedoch eine Ausführung, bei der die Prallschräge als Wandungsabschnitt eines in das Strahlreglergehäuse einsetzbaren ringförmigen oder hülsenförmigen Einsetzteils ausgebildet ist.

Um dabei in das Gehäuseinnere des Strahlreglergehäuses zumindest ein Strahlformteil einsetzen und den erfindungsgemäßen Mengenregler einfach montieren zu können, ist es vorteilhaft, wenn das Strahlreglergehäuse mehrteilig ausgebildet ist und zumindest zwei, vorzugsweise lösbar miteinander verbindbare Gehäuseteile hat.

Die in der Lochplatte vorgesehenen Durchflusslöcher können in Form eines oder auch mehrerer konzentrischer Lochkreise angeordnet sein. Dabei hat die Lochplatte die schon erwähnte zentrale lochfreie Prallfläche, die von den Ringwandungen umgrenzt wird.

Das im Bereich der Ringwandungen und insbesondere der ersten äußeren Ringwandung umgelenkte Wasser wird dabei zunächst abgebremst, zur Seite hin ausgelenkt und durch in gegensinnigen Richtungen aufeinander zuströmende Teilströme durchmischt, bevor es durch die Durchflusslöcher der Lochplatte hindurchfließen und auf der Abströmseite der Lochplatte in Form einer entsprechenden Anzahl von Sprühkegeln austreten kann. Dabei kann dies auch weitgehend unabhängig von dem Druck des zuströmenden Wassers dadurch gelingen, dass erfindungsgemäß über der Prallfläche und den Ringwandungen der Mengenregler vorgesehen ist.

Um das im Gehäuseinnenraum des Strahlreglergehäuses mit Umgebungsluft durchmischte und entsprechend aufgewirbelte Wasser auf der Abströmseite des Strahlreglers wieder zu einem homogenen Gesamtstrahl zu formen und um das aus dem Strahlregler austretende Wasser in einer abströmseitigen Homogenisierungseinrichtung zu einem nicht-spritzend austretenden Wasserstrahl formen zu können unabhängig davon, dass das Wasser mit unterschiedlichen Drücken in den Strahlregler eintreten kann, ist es zweckmäßig, wenn die abströmseitige Stirnfläche des Strahlreglergehäuses durch eine Netz- oder eine Wabenzellenstruktur gebildet ist und wenn die die abströmseitige Stirnfläche bildende Netz- oder Wabenzellenstruktur entweder mit dem Strahlreglergehäuse unlösbar verbunden und/oder insbesondere einstückig angeformt oder durch ein in das Strahlreglergehäuse einsetzbares Einlegeteil gebildet ist. Dabei kann die erwähnte Wirkung auf die Formung des abströmenden Gesamtstrahls in vorteilhafter Weise unabhängig von dem Druck des zuströmenden Wassers erfolgen, wenn und weil erfindungsgemäß in Strömungsrichtung des Wassers vor oder über der Prallfläche ein Mengenregler in der beschriebenen Weise vorgesehen ist.

Die Vergleichmäßigung des aus dem Strahlregler austretenden Gesamtstrahls wird weiter begünstigt, wenn die die abströmseitige Stirnfläche des Strahlreglergehäuses bildende Netz- oder Wabenzellenstruktur durch Stege gebildet ist, die sich zumindest in einem abströmseitigen Teilbereich in Strömungsrichtung verjüngen.

Eine bevorzugte: Weiterbildung des erfindungsgemäßen Strahlreglers kann vorsehen, dass dieser als belüfteter Strahlregler gestaltet ist, welcher zumindest eine Belüftungsöffnung hat, die auf der Abströmseite der Lochplatte im Gehäuseinnenraum mündet und die den Gehäuseinnenraum mit der Atmosphäre verbindet. Damit die zumindest eine Belüftungsöffnung den Gehäuseinnenraum mit der Atmosphäre verbinden kann, kann in einem doppelwandigen Teilbereich des Strahlreglergehäuses oder in einem das Strahlreglergehäuse umgrenzenden Ringspalt wenigstens ein Belüftungskanal vorgesehen sein, der zur Atmosphäre hin offen gestaltet ist.

Vor allem bei Kombination einzelner oder mehrerer der vorbeschriebenen Merkmale und Maßnahmen ergibt sich ein Strahlregler, bei welchem die Vorteile eines gut belüfteten Wasserstrahls durch einzelne oder mehrere Maßnahmen und Merkmale erzielt werden, wobei dies bei Anordnung eines Mengenreglers auch möglich ist, ohne bei hohem Wasserdruck eine ungewollt große Wassermenge zu benötigen.

Nachstehend sind Ausführungsbeispiele der Erfindung anhand der Zeichnung näher beschrieben. Es zeigt in zum Teil schematisierter Darstellung:
- Figur 1: einen perspektivischen Teil-Längsschnitt eines erfindungsgemäßen Strahlreglers, der mit einem abströmseitigen Gehäuseteil in ein nicht dargestelltes Strahlreglergehäuse passt und der eine Lochplatte mit einer zentralen Prallfläche und zwei diese konzentrisch umgebenden Ringwandungen sowie Durchflusslöcher und in Strömungsrichtung des Wassers oberhalb der Lochplatte einen Mengenregler aufweist,
- Figur 2: den Strahlregler aus Figur 1 in einer auseinandergezogenen perspektivischen Einzelteildarstellung,
- Figur 3: eine perspektivische Draufsicht der Lochplatte mit ihrer zentralen Prallfläche, den beiden sie konzentrisch umschließenden Ringwandungen und einem mit der Lochplatte einstückig verbundenen zuströmseitigen, mit dem abströmseitigen Gehäuseteil verbindbaren Gehäuseteil,
- Figur 4: einen Teil-Längsschnitt der Lochplatte mit dem zuströmseitigen Gehäuseteil, wobei die Durchtrittsöffnungen der beiden konzentrisch zueinander angeordneten Ringwandungen einander benachbart und hinsichtlich ihrer gegenseitigen relativen Höhenlage verdeutlicht dargestellt sind,
- Figur 5: eine der Figur 1 entsprechende Darstellung eines abgewandelten Ausführungsbeispieles eines erfindungsgemäßen Strahlreglers, welcher oberhalb der Lochplatte - anstelle eines Mengenreglers - eine Drosseleinrichtung aufweist, sowie
- Figur 6: eine der Figur 3 entsprechende perspektivische Draufsicht einer abgewandelten Lochplatte mit zentraler Prallfläche und zwei konzentrisch angeordneten Ringwandungen, wobei die innenliegende Ringwandung mit geringerem Durchmesser durch einen oberen umlaufenden Rand in axialer Richtung nach oben begrenzt ist.

Bei den nachfolgend beschriebenen Ausführungsbeispielen erhalten hinsichtlich ihrer Funktion übereinstimmende Teile auch bei abgewandelter Formgebung übereinstimmende Bezugszahlen.

Ein im Ganzen mit 1 bezeichneter Strahlregler weist in üblicher Form und etwa analog der Patentanmeldung DE 10 2012 021 661.1 ein nicht näher dargestelltes Strahlreglergehäuse auf beziehungsweise passt in ein solches Strahlreglergehäuse, welches zur Befestigung des Strahlerglers an einem Wasserauslauf ein Außengewinde oder in einem überstehenden Teil ein Innengewinde haben kann.

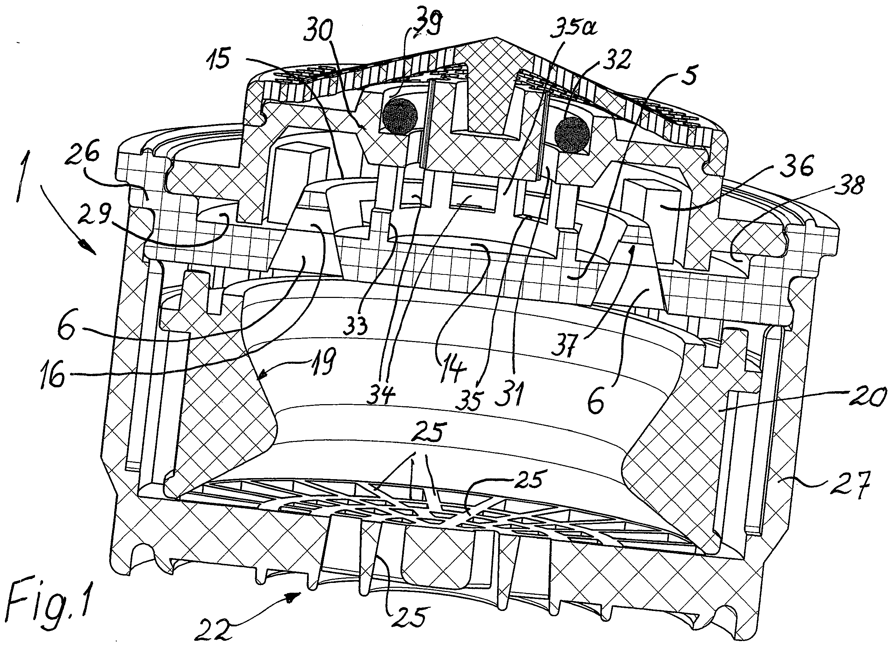

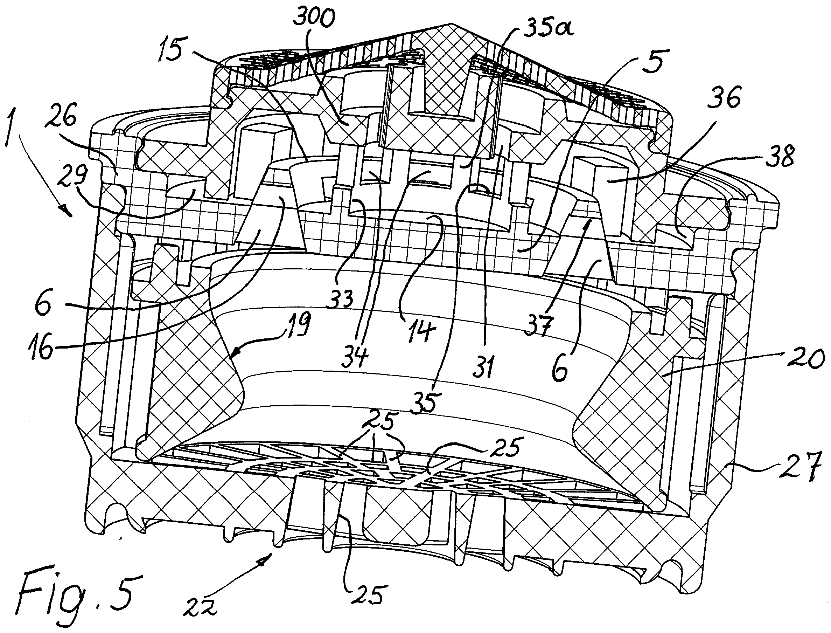

Gemäß Figur 1 und 5 ist im Gehäuseinnenraum eine Lochplatte 5 mit einer Mehrzahl von in Figur 1 erkennbaren, in vertikaler Richtung verlaufenden Durchflusslöchern 6 zum Aufteilen des durchströmenden Wassers vorgesehen. Die Lochplatte 5 hat dabei eine zentrale, lochfreie Prallfläche 14, konzentrisch zu welcher eine äußere erste Ringwandung 15 verläuft, die in radialer Richtung orientierte und gemäß Figur 1, 4, 5 und 6 den gesamten Querschnitt der Ringwandung 15 durchsetzende Durchtrittsöffnungen 16 aufweist.

Auf der in der Prallflächenebene angeordneten Seite der Durchtrittsöffnungen 16 sind die jeweils mit diesen Durchtrittsöffnungen 16 verbundenen, die Lochplatte 5 durchsetzenden Durchflusslöcher 6 vorgesehen. Die Ringwandung 15 ist dabei außenumfangsseitig von einem ringförmigen Ringraum 29 und einem im Ausführungsbeispiel einstückig mit der Lochplatte 5 verbundenen zuströmseitigen Gehäuseteil 26 umschlossen.

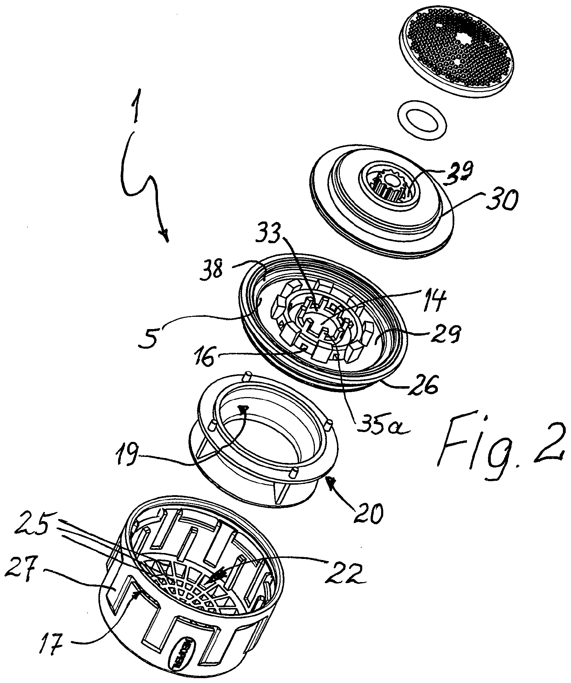

Gemäß den Figuren 1 und 2 ist in Strömungsrichtung des Wassers vor oder über der Prallfläche 14 ein im Ganzen mit 30 bezeichneter Mengenregler mit einer kreisringförmigen Durchlassöffnung 31 vorgesehen, die zweckmäßigerweise durch Stege unterbrochen und dadurch zusammengehalten ist. Der Durchlassquerschnitt dieser Durchlassöffnung 31, der zu einem im Wesentlichen kreisringförmigen Wasserfluss führt, wirkt mit einem oberhalb angeordneten, mittels Wasserdruck verformbaren Dichtring 32 oder O-Ring derart zusammen, dass durch die Verformung dieses Dichtringes 32 durch den Wasserdruck der Durchlassquerschnitt der Durchlassöffnung 31 vermindert werden kann, so dass bei höherem Wasserdruck selbsttätig oder automatisch trotz dieses höheren Wasserdrucks die Durchlassmenge begrenzt und eingestellt werden kann.

Zur Bildung eines perlenden-optisch großvolumigen Wasserstrahls ist dabei gemäß den Figuren 1 bis 6 auf der Lochplatte 5 eine die Prallfläche 14 umschließende zweite Ringwandung 33 vorgesehen, die sich unterhalb der Durchlassöffnung 31 und in radialer Richtung außerhalb der koaxialen Projektion dieser Durchlassöffnung 31 innerhalb der ersten Ringwandung 15 koaxial und radial zu dieser beabstandet befindet und also einen geringeren Durchmesser als die erste Ringwandung 15 hat. Außerdem hat diese zweite Ringwandung 33 einen geringeren Durchmesser als die oberhalb der Prallfläche 14 angeordnete kreisringförmige Durchlassöffnung 31.

Diese zweite Ringwandung 33 geringeren Durchmessers weist ebenfalls in radialer Richtung angeordnete Durchtrittsöffnungen 34 auf, die dabei, wie besonders deutlich in Figur 1, 3 und 4 erkennbar ist, mit ihrem unteren Rand 35 einen Abstand zu der Prallfläche 14 haben, also ihr unterer Rand 35 oberhalb der Prallfläche 14 angeordnet ist. Durch diese Durchtrittsöffnungen 34 kann also das zuströmende Wasser, wenn es diesen unteren Rand 35 erreicht hat, in radialer Richtung in den Zwischenraum zwischen der ersten Ringwandung 15 und der zweiten Ringwand 33 gelangen.

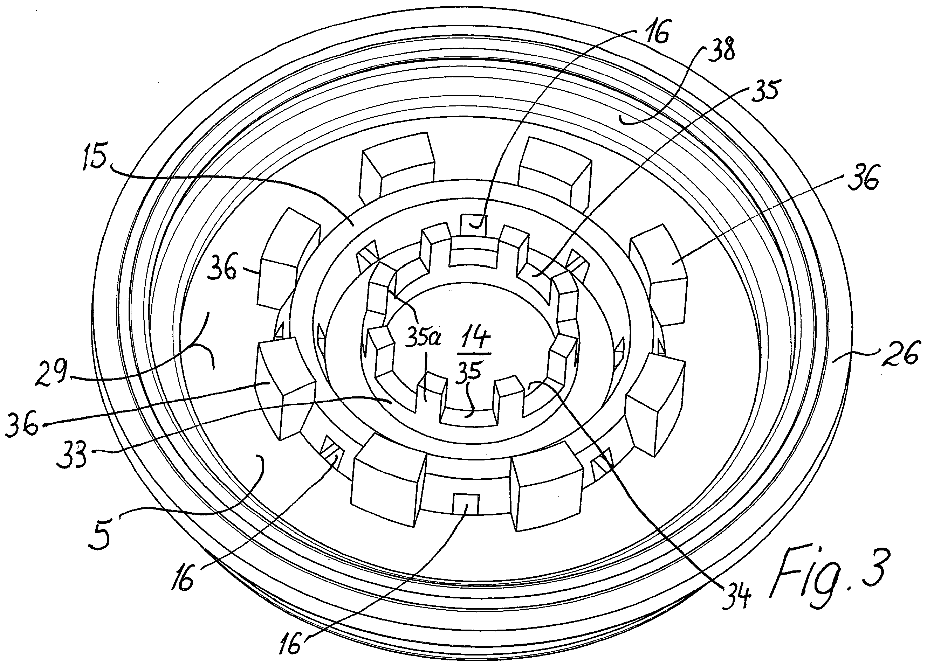

Vor allem in Figur 3 mit dem Blick schräg von oben auf die Prallfläche 14 und die beiden konzentrisch dazu angeordneten Ringwandungen 15 und 33 erkennt man, dass außerhalb der ersten, größeren Ringwandung 15 ein zwar am Außenumfang ringförmiger Ringraum 29 vorgesehen ist, der aber in seinem Verlauf um die erste Ringwandung 15 herum bereichsweise derart eingeengt ist, dass sich in Umfangsrichtung einzelne Bereiche abwechseln, die in radialer Richtung schmaler und dann wieder breiter sind. Dabei sind die breiteren Bereiche jeweils dort angeordnet, wo radial orientierte Durchtrittsöffnungen 16 an dieser Ringwand 15 vorgesehen sind. Um dies zu verwirklichen, sind an der Außenseite der ersten Ringwandung 15 Vorsprünge 36 zwischen all diesen in der Ringwandung 15 angeordneten Durchtrittsöffnungen 16 vorgesehen, die in radialer Richtung nach außen in den Ringraum 29 ragen und somit Verengungen dieses äußeren Ringraumes 29 bilden und jeweils von einer benachbarten Durchtrittsöffnung 16 denselben Abstand haben. Die Durchtrittsöffnungen 16 sind also jeweils mittig zwischen zwei benachbarte Vorsprüngen 36 angeordnet, welche ihrerseits übereinstimmende Formen und Abmessungen haben.

Dabei sind diese Vorsprünge 36 an der Außenseite der ersten Ringwandung 15 mit dieser fugenlos und vorzugsweise einstückig verbunden und überragen die erste Ringwandung 15 in axialer Richtung entgegen der Strömungsrichtung des zugeführten Wassers nahezu um den Überstand der ersten Ringwandung 15 gegenüber der Prallfläche 14 und der Bodenbegrenzung des Ringraumes 29.

Ferner nehmen diese als Stauelemente für das über die erste Ringwandung 15 übertretende Wasser wirkenden Vorsprünge 36 in radialer Richtung etwa ein Drittel der radialen Abmessung oder Breite des äußeren Ringraumes 29 ein und sind im Ausführungsbeispiel an ihrem der ersten Ringwandung 15 abgewandten Ende kantig ausgebildet, könnten aber gegebenenfalls auch abgerundet sein. Ihre bodenseitige Begrenzung ist dabei ebenso wie die obenliegende parallele Endbegrenzung kreisbogenförmig ausgebildet, wobei der Krümmungsmittelpunkt des jeweiligen Kreisbogens in der Mitte der Prallfläche 14, also dem Durchtritt der gedachten Mittelachse des Strahlreglers 1 angeordnet ist. Die Kreisbogenstücke am der Mitte abgewandten Rand der Vorsprünge 36 sind also konzentrisch zu den Ringwandungen 15 und 33 angeordnet und begrenzen entsprechende Zylinderstücke als vertikale Begrenzungsflächen dieser Vorsprünge 36 auf der den Ringwandungen abgewandten Seite.

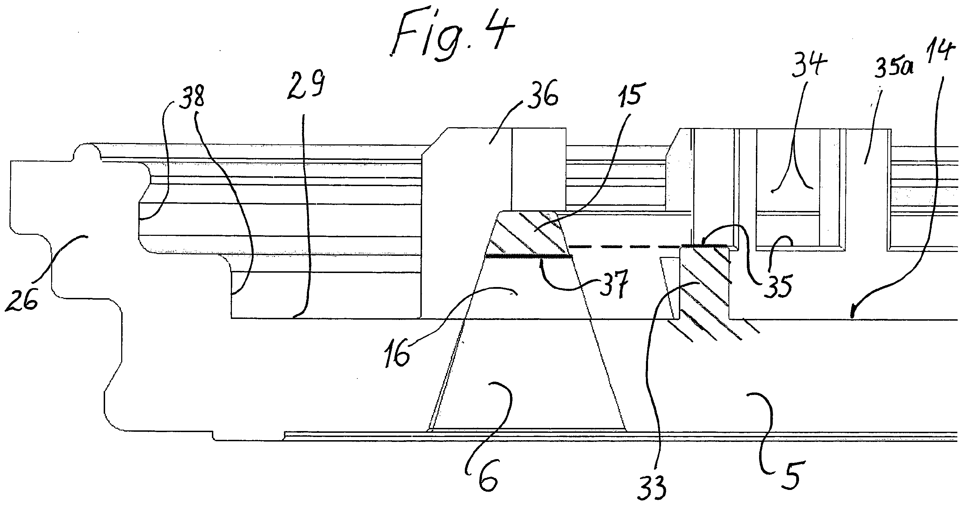

Vor allem anhand der Figur 4 aber auch in Figur 1 erkennt man, dass die unteren Ränder 35 der mit Abstand oberhalb der Prallfläche 14 in der zweiten Ringwandung 33 angeordneten radialen Durchtrittsöffnungen 34 höher als die obere Begrenzung 37 der Durchtrittsöffnungen 16 in der ersten Ringwandung 15 angeordnet sind. Durch diese zunächst ununterbrochene Form der zweiten, inneren Ringwandung 33 muss das einströmende Wasser zunächst eine gewisse Höhe erreichen, bevor es radial zu den Seiten hin abfließen kann. Dadurch wird eine direkte Strömung in die Durchtrittsöffnungen 16 in der ersten Ringwandung 15 von der Innenseite her verhindert, so dass das auch die erste Ringwandung 15 teilweise überströmende Wasser weitgehend im Gleichgewicht sowohl von innen als auch von außen in die Durchtrittsöffnungen 16 eintreten und dann durch die gegenseitige Neutralisierung der Strömungsrichtungen und - kräfte etwa vertikal in die Durchflusslöcher 6 eintreten und durch diese abfließen kann.

Dabei erkennt man in den genannten Figuren auch, dass die unteren Ränder 35 der Durchtrittsöffnungen 34 in der zweiten Ringwandung 33 und auch die oberen Begrenzungen 37 der Durchtrittsöffnungen 16 in der ersten Ringwandung 15 in zwei parallelen, rechtwinklig zur Längsmittelachse des Strahlreglers 1 liegenden Ebenen angeordnet sind und eben verlaufen. Denkbar wäre auch, dass sie in einer gemeinsamen Ebene angeordnet sind und dann auf gleicher Höhe lägen.

Die an der zweiten Ringwandung 33 vorgesehenen Durchtrittsöffnungen 34 weisen jeweils geradlinige, achsparallel verlaufende seitliche Begrenzungen 35a auf, die nach oben entgegen der Strömungsrichtung des zugeführten Wassers gemäß Figur 3 und 4 frei enden, aber gemäß Figur 1 durch die Unterseite des auf diesen Enden aufliegenden Mengenreglers 30 auch nach oben abgeschlossen sind. Somit ist dieses aus der Lochplatte 5 mit der Prallfläche 14, den Ringwandungen 15 und 33 und dem äußeren Ringraum 29 sowie einer außen umlaufenden Abschlusswand 38 gebildete zuströmseitige Gehäuseteil 26 relativ einfach und preiswert insbesondere einstückig herstellbar.

Der an dem Mengenregler 30 in einer die Durchlassöffnung 31 bodenseitig angeordneten Nut 39 angeordnete Dichtring 32, der bevorzugt ein O-Ring sein kann, ist in axialer Richtung gesehen oberhalb und gemäß Figur 1 praktisch koaxial zu der zweiten Ringwandung 33 parallel zu dieser angeordnet. Die radiale Abmessung dieser den Dichtring 32 aufnehmenden Nut 39 ist dabei aber größer als die der zweiten Ringwandung 33 und die Durchlassöffnung 31 befindet sich in demjenigen Bereich der Nut 39, der die zweite Ringwandung 33 in radialer Richtung nach innen überragt. Der Durchmesser der ringförmigen Durchlassöffnung 31, die zweckmäßigerweise aus im Kreis nebeneinander angeordneten Einzelöffnungen gebildet ist, ist also kleiner als der Innendurchmesser der zweiten Ringwandung. 33. Dadurch wird sichergestellt, dass das durch die Durchlassöffnung 31 auf die Prallfläche 14 gelangende Wasser nur innerhalb der zweiten Ringwandung 33 Zutritt erhält.

Von dort kann es dann über die unteren Ränder 35 der Durchtrittsöffnungen 34 der zweiten Ringwandung 33 in den Zwischenraum zwischen den beiden Ringwandungen und zum Teil über die erste, außenliegende Ringwandung 15 hinweg in den äußeren Ringraum 29 gelangen und in der schon beschriebenen Weise beidseits in die Durchtrittsöffnungen 16 der ersten äußeren Ringwandung 15 eintreten und zu den abwärts gerichteten Durchflusslochungen 6 gelangen, wobei die von beiden Seiten in die Durchtrittsöffnungen 16 eintretenden Wasserströme sich im Inneren dieser Durchtrittsöffnungen 16 treffen und dadurch abwärts in die Durchflusslöcher 6 gelangen.

In Figur 1, 4 und 5 erkennt man, dass zumindest ein Durchflussloch 6, gemäß Figur 1 und 5 alle Durchflusslöcher 6 der Lochplatte 5 sich zumindest in einem abströmseitigen Teilbereich zu ihrer Abströmseite hin kegelförmig oder konisch erweitern. Auch eine stufenförmige Erweiterung wäre denkbar.

Die in der Lochplatte 5 vorgesehenen Durchflusslöcher 6 sind in allen dargestellten Ausführungsbeispielen zum Aufteilen des durchströmenden Wassers bestimmt. Durch das bevorzugt über die gesamte Länge der Durchflusslöcher 6 kegelförmige oder konische Aufspreizen des aus der Lochplatte 5 austretenden Wassers kann sich dieses selbst bei geringen Durchflussleistungen und niedrigen Wasserdrücken, wie sie auch durch den Mengenregler 30 in diesem Bereich gebildet werden, praktisch über den gesamten Querschnitt des Strahlreglers mit der eingesaugten Umgebungsluft vermischen.

Dabei erweitern sich die Durchflusslöcher 6 derart kegelförmig oder konisch, dass der aus den Dürchflusslöchern 6 austretende und durch die Kegelform oder die Konizität sich erweiternde Wasserstrahl sich im Gehäuseinnenraum noch vor dem Auftreffen von Einzelstrahlen auf im Gehäuseinnenraum angeordnete Strahlformteile mit dem Einzelstrahl wenigstens eines benachbarten Durchflussloches 6 durchmischt.

Durch die schon erwähnte Umlenkung des anströmenden Wassers und dessen Eintritt von beiden Seiten in die Durchtrittsöffnungen 16 wird dieses anströmende Wasser im Bereich der Durchflusslöcher 6 abgebremst und in Folge der Verengung des Durchflussquerschnitts in den Durchflusslöchern 6 wieder beschleunigt. Gemäß der Bernoullischen Gleichung wird durch diese Geschwindigkeitserhöhung auf der Abströmseite der Lochplatte 5 ein Unterdruck erzeugt, mittels welchem Umgebungsluft in den Gehäuseinnenraum des Strahlreglers 1 eingesaugt werden kann. In der Gehäuseumfangswandung des abströmseitigen Gehäuseteils 27 sind dazu Belüftungsöffnungen 17 (Figur 2) vorgesehen, durch welche Umgebungsluft zutreten und von dem Wasser mitgerissen werden kann.

Dabei erkennt man insbesondere in Figur 1 und 5, dass auf der Abströmseite der Lochplatte 5 mit Abstand von dieser eine umlaufende Prallschräge 19 vorgesehen ist, die den lichten Gehäusequerschnitt in diesem Bereich in Strömungsrichtung zunehmend verengt. Diese Prallschräge 19 bildet die Zuströmseite eines kreisringförmigen Wandabschnitts, der als zumindest eine in Längsrichtung im Längsschnitt wellenförmige Einschnürung ausgebildet ist. Der die Prällschräge 19 aufweisende Wandungsabschnitt ist hier als ein in das Strahlreglergehäuse einsetzbares ring- oder hülsenförmiges Einsetzteil 20 ausgestaltet.

Bei einer nicht-dargestellten Ausführungsform könnte die Prallschräge 19 am Gehäuseinnenumfang des abströmseitigen Gehäuseteils 27 einstückig angeformt sein. Hingegen ist dargestellt und im Ausführungsbeispiel vorgesehen, dass die Lochplatte 5 in dem Gehäuseinnenraum des zuströmseitigen Gehäuseteils 26 einstückig angeformt ist. Das Strahlreglergehäuse kann also mehrteilig ausgestaltet und zumindest zwei insbesondere lösbar miteinander verbindbare Gehäuseteile 26 und 27 aufweisen.

In den Figuren 1, 2 und 5 ist dargestellt, dass die abströmseitige Stirnfläche des erfindungsgemäßen Strahlreglers durch eine Netz- oder Wabenzellenstruktur 22 gebildet ist und dass die die abströmseitige Stirnfläche bildende Netz- oder Wabenzellenstruktur 22 mit dem abströmseitigen Strahlreglergehäuseteil 27 unlösbar verbunden und insbesondere einstückig angeformt ist. Sie könnte aber auch durch ein einsetzbares Einlegeteil gebildet sein.

Die die abströmseitige Stirnfläche des Strahlreglers bildende Netz- oder Wabenzellenstruktur 22 ist gemäß Figur 1, 2 und 5 durch Stege 25 gebildet, die sich zumindest in einem abströmseitigen Teilbereich gemäß Figur 1 in Strömungsrichtung verjüngen.

Insgesamt ist der Strahlregler 1 als belüfteter Strahlregler ausgestaltet, der, wie bereits erwähnt, Belüftungsöffnungen 17 hat, die auf der Abströmseite der Lochplatte 5 im Inneren des Strahlreglergehäuses münden und die den Gehäuseinnenraum mit der Atmosphäre verbinden.

Im Ausführungsbeispiel gemäß Figur 5 sind praktisch alle Einzelheiten und Teile in mit Figur 1 übereinstimmender Form und Anordnung dargestellt. Die diesbezügliche Beschreibung der in Figur 5 enthaltenen Bezugszahlen entspricht der Beschreibung der Figur 1. Abweichend gegenüber Figur 1 ist, dass in Strömungsrichtung des Wassers vor und über der Prallfläche 14 anstelle eines Mengenreglers 30 eine Drosseleinrichtung 300 vorgesehen ist. Dabei ist diese Drosseleinrichtung 300 dadurch gebildet, dass in der Nut 39 kein Dichtring 32 oder O-Ring enthalten ist, so dass das Wasser durch diese Nut 39 und die Durchlassöffnung 31 zu der Prallfläche 14 gelangen kann. Die Strömung setzt sich dann von dort aus in der schon beschriebenen Weise zu den Durchtrittsöffnungen 16 und den Durchflusslöchern 6 fort.

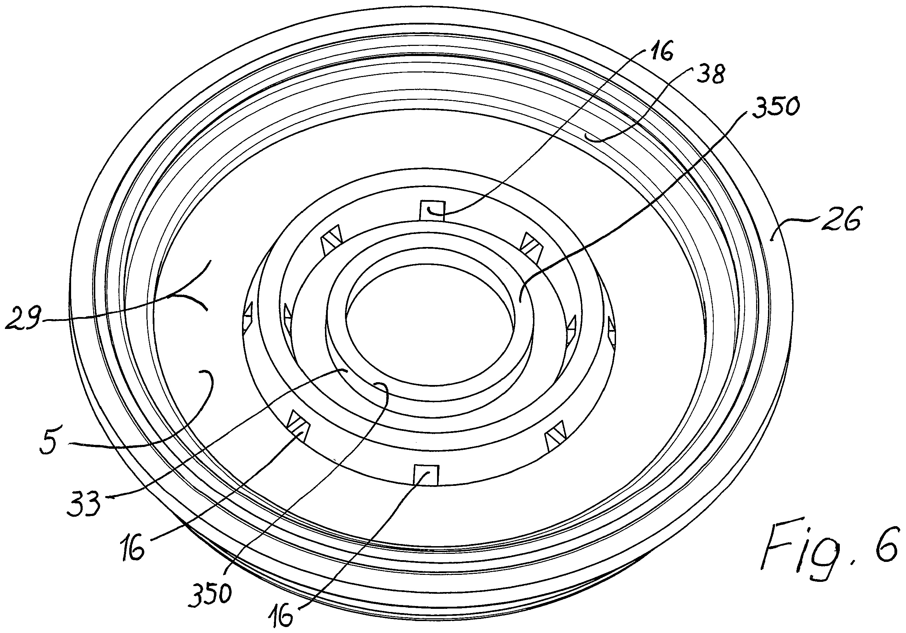

In Figur 6 erkennt man Abwandunglungen der Lochplatte 5. Die zweite Ringwandung 33 weist dabei keine mit Abstand zur Prallfläche 14 angeordneten Durchtrittsöffnungen 34 auf, sondern wird umlaufend nach oben durch einen oberen Rand 350 begrenzt, der in seiner Funktion praktisch dem unteren Rand 35 der Durchtrittsöffnungen 34 des Ausführungsbeispiels gemäß Figur 3 und 4 entspricht. Der Rand 350 hat somit relativ zu der oberen Begrenzung 37 der Durchtrittsöffnungen 16 in der ersten Ringwandung 15 dieselbe Lage, d.h. er kann damit in einer übereinstimmenden Ebene oder in einer höheren Ebene angeordnet sein.

Dabei ist die Herstellung dieser Lochplatte 5 dadurch vereinfacht, dass sie an der Außenseite der ersten Ringwandung 15 frei von Vorsprüngen 36 ist, die aber auch vorgesehen sein könnten.

Wahlweise könnten die zweite Ringwandung 33 mit Durchtrittsöffnungen 34 und die erste Ringwandung 15 ohne Vorsprünge 36 oder die zweite Ringwandung 33 mit einem sie nach oben begrenzenden Rand 350 und die erste Ringwandung 15 mit oder ohne Vorsprünge 36 ausgeführt sein.

Wie in Figur 3 dargestellt, könnten dabei alle Vorsprünge 36 übereinstimmende Abmessungen und Formen haben und von den benachbarten Durchtrittsöffnungen 16 jeweils denselben Abstand einhalten, um möglichst gleichmäßige Strömungsverhältnisse zu erzielen.

Der Strahlregler 1 mit einer in seinem Inneren angeordneten Lochplatte 5 und diese durchsetzenden Durchflusslöchern 6 zum Aufteilen des durchströmenden Wassers weist an der Lochplatte 5 eine zentrale, lochfreie Prallfläche 14 auf, die von einer ersten Ringwandung 15 umgrenzt ist, welche in radialer Richtung orientierte und sie durchsetzende Durchtrittsöffnungen 16 aufweist, wobei auf der in der Prallflächenebene angeordneten Seite der Durchtrittsöffnungen 16 jeweils ein mit den Durchtrittsöffnungen 16 verbundenes Durchflussloch 6 durch die Lochplatte 5 vorgesehen ist. Die Ringwandung 15 ist außenumfangsseitig von einem ringförmigen Ringraum 29 umschlossen. In Strömungsrichtung des Wassers vor der Prallfläche 14 ist ein Mengenregler 30 oder eine Drosseleinrichtung 300 vorgesehen, wodurch der Wasserverbrauch eingeschränkt und/oder die Wassermenge weitgehend unabhängig von dem jeweiligen Wasserdruck wird. Ferner ist koaxial und konzentrisch zu der ersten Ringwandung 15 eine zu dieser beabstandete zweite Ringwandung 33 geringeren Durchmessers vorgesehen, die mit Abstand oberhalb der Prallfläche 14 angeordnete radiale Durchtrittsöffnungen 34 hat, durch welche das Wasser Zutritt zu der ersten Ringwandung 15 und zu deren Durchtrittsöffnungen 16 und damit zu den Durchflusslochungen 6 hat. Durch diese Kombination wird die durch den Strahlregler fließende Wassermenge praktisch unabhängig von dem vor dem Strahlregler 1 herrschenden Wasserdruck.

## Patentansprüche

1. Strahlregler (1) mit einem Strahlreglergehäuse, in dessen Gehäuseinnenraum eine Lochplatte (5) mit einer Mehrzahl von Durchflusslöchern (6) zum Aufteilen des durchströmenden Wassers vorgesehen ist, wobei die Lochplatte (5) eine zentrale, lochfreie Prallfläche (14) hat, die zumindest von einer Ringwandung (15) umgrenzt ist, wobei die Ringwandung (15) in radialer Richtung orientierte Durchtrittsöffnungen (16) aufweist und auf der in der Prallflächenebene angeordneten Seite der Durchtrittsöffnungen (16) jeweils ein mit den Durchtrittsöffnungen (16) verbundenes Durchflussloch (6) durch die Lochplatte (5) vorgesehen und die Ringwandung (15) außenumfangsseitig von einem ringförmigen Ringraum (29) umschlossen ist, **dadurch gekennzeichnet, dass** in Strömungsrichtung des Wassers vor oder über der Prallfläche (14) eine Drosseleinrichtung (300) und/oder ein Mengenregler (30) mit Durchlassöffnung (31) vorgesehen ist, und dass die Prallfläche (14) eine innerhalb der ersten Ringwandung (15) radial zu dieser beabstandete zweite Ringwandung (33) geringeren Durchmessers aufweist, wobei der Strahlregler (1) derart eingerichtet ist, dass von der Drosseleinrichtung (300) und/oder dem Mengenregler (30) kommendes Wasser auf die Prallfläche (14) auftrifft und die zweite Ringwandung (33) bis zu einer Höhe ausfüllt, bevor es radial in einen Zwischenraum zwischen der ersten Ringwandung (15) und der zweiten Ringwandung (33) abfließt und anschließend in die Durchflusslöcher (6) eintritt und durch diese abfließt.

2. Strahlregler nach Anspruch 1, **dadurch gekennzeichnet, dass** die Durchlassöffnung (31) einen vorgewählten oder vorbestimmten Durchlassquerschnitt aufweist, der bei der Drosseleinrichtung (300) die Drosselwirkung bestimmt und/oder bei dem Mengenregler (30) durch einen oberhalb des Mengenreglers (30) befindlichen, mittels Wasserdruck verformbaren Dichtring (32) oder O-Ring selbsttätig oder automatisch auf eine Durchlassmenge einstellbar ist.

3. Strahlregler nach Anspruch 1 oder 2, **dadurch gekennzeichnet, dass** die zweite Ringwandung (33) in Strömungsrichtung hinter oder unterhalb der Durchlassöffnung 31 gesehen in radialer Richtung außerhalb der koaxialen Projektion dieser Durchlassöffnung (31) angeordnet ist.

4. Strahlregler nach einem der Ansprüche 1 bis 3, **dadurch gekennzeichnet, dass** die zweite Ringwandung (33) mit Abstand oberhalb der Prallfläche (14) angeordnete radiale Durchtrittsöffnungen (34) oder einen parallel zur Prallfläche (14) verlaufenden, von dem Wasser überströmbaren Rand (350) aufweist.

5. Strahlregler nach einem der Ansprüche 1 bis 4, **dadurch gekennzeichnet, dass** der außerhalb der ersten Ringwandung (15) befindliche Ringraum (29) in seinem Verlauf um die erste Ringwandung (15) herum bereichsweise derart eingeengt ist, dass sich in Umfangsrichtung in radialer Richtung schmalere und breitere Bereiche abwechseln.

6. Strahlregler nach einem der Ansprüche 1 bis 5, **dadurch gekennzeichnet dass** an der Außenseite der ersten Ringwandung (15) Vorsprünge (36) zumindest zwischen einzelnen oder zwischen allen in dieser Ringwandung (15) angeordneten Durchtrittsöffnungen (16) vorgesehen sind, die in radialer Richtung in den Ringraum (29) außerhalb der ersten Ringwandung ragen und somit Verengungen dieses äußeren Ringraumes (29) bilden.

7. Strahlregler nach Anspruch 6, **dadurch gekennzeichnet, dass** die Durchtrittsöffnungen (16) mittig zwischen zwei benachbarten Vorsprüngen (36) angeordnet sind und die Vorsprünge (36) von einer ihnen benachbarten Durchtrittsöffnung (16) jeweils vorzugsweise denselben Abstand haben.

8. Strahlregler nach Anspruch 6 oder 7, **dadurch gekennzeichnet, dass** alle Vorsprünge (36) übereinstimmende Abmessungen und Formen haben.

9. Strahlregler nach einem der Ansprüche 6 bis 8, **dadurch gekennzeichnet dass** die Vorsprünge (36) an der Außenseite der ersten Ringwandung (15) mit dieser fugenlos oder insbesondere einstückig verbunden sind und die erste Ringwandung (15) vorzugsweise in axialer Richtung entgegen der Strömungsrichtung des zugeführten Wassers überragen.

10. Strahlregler nach einem der Ansprüche 6 bis 9, **dadurch gekennzeichnet, dass** die als Stauelemente für das über die erste Ringwandung (15) übertretende Wasser wirkenden Vorsprünge (36) in radialer Richtung etwa ein Drittel der radialen Abmessung oder Breite des äußeren Ringraumes (29) einnehmen und an ihrem der ersten Ringwandung (15) abgewandten Ende vorzugsweise kantig oder gegebenenfalls abgerundet sind.

11. Strahlregler nach einem der Ansprüche 1 bis 10, **dadurch gekennzeichnet, dass** die unteren Ränder (35) der mit axialem Abstand oberhalb der Prallfläche (14) in der zweiten Ringwandung (33) angeordneten radialen Durchtrittsöffnungen (34) oder der obere Rand (350) der zweiten Ringwandung (33) auf gleicher Höhe oder höher als die obere Begrenzung (37) der Durchtrittsöffnungen (16) in der ersten Ringwandung (15) angeordnet ist/sind.

12. Strahlregler nach einem der Ansprüche 1 bis 11, **dadurch gekennzeichnet, dass** die unteren Ränder (35) der Durchtrittsöffnungen (34) in der zweiten Ringwandung (33) oder der obere Rand (350) der zweiten Ringwandung (33) und/oder die oberen Begrenzungen (37) der Durchtrittsöffnungen (16) in der ersten Ringwandung (15) in einer gemeinsamen oder in zwei parallelen rechtwinklig zur Längsmittelachse liegenden Ebenen angeordnet sind und insbesondere eben verlaufen.

13. Strahlregler nach einem der Ansprüche 2 bis 12, **dadurch gekennzeichnet, dass** der an dem Mengenregler (30) in einer Nut (39) mit der Durchlassöffnung (31) angeordnete Dichtring (32) oder O-Ring in axialer Richtung gesehen oberhalb der zweiten Ringwandung (33), insbesondere parallel zu dieser, angeordnet ist, dass die Projektion der Durchlassöffnung (31) auf die Prallfläche (14) innerhalb der zweiten Rindwandung (33) angeordnet ist, dass dabei die radiale Abmessung der den Dichtring (32) oder O-Ring aufnehmenden Nut (39) insbesondere größer als die der zweiten Ringwandung (33) ist und dass die Durchlassöffnung (31) in demjenigen Bereich der Nut (39) angeordnet ist, der die zweite Ringwandung (33) in radialer Richtung nach innen überragt, oder dass die Projektion der Nut (39) mit dem Dichtring (32) oder O-Ring und der Durchlassöffnung (31) auf die Prallfläche (14) innerhalb der zweiten Ringwandung (33) angeordnet sind.

14. Strahlregler nach einem der Ansprüche 4 bis 13, **dadurch gekennzeichnet, dass** die an der zweiten Ringwandung (33) vorgesehenen Durchtrittsöffnungen (34) jeweils seitliche Begrenzungen (35a) aufweisen, die nach oben entgegen der Strömungsrichtung des zugeführten Wassers frei enden, und dass diese radialen Durchtrittsöffnungen in der zweiten Ringwandung (33) nach oben durch die Unterseite des aufliegenden Mengenreglers (30) oder der aufliegenden Drosseleinrichtung (300) abgeschlossen sind.

15. Strahlregler (1) mit einem Strahlreglergehäuse, in dessen Gehäuseinnenraum eine Lochplatte (5) mit einer Mehrzahl von Durchflusslöchern (6) zum Aufteilen des durchströmenden Wassers vorgesehen ist, von denen zumindest ein Durchflussloch (6) sich wenigstens in einem abströmseitigen Lochabschnitt zu seiner Abströmseite hin kegelförmig oder konisch oder stufenförmig erweitert, **dadurch gekennzeichnet, dass** auf der Abströmseite der Lochplatte (5) mit Abstand von dieser eine umlaufende Prallschräge (19) vorgesehen ist, die den lichten Gehäusequerschnitt in diesem Bereich in Strömungsrichtung zunehmend verengt, wobei der Strahlregler (1) derart eingerichtet ist, dass das aus den Durchflusslöchern (6) austretende Wasser auf die Prallschräge (19) auftrifft.

16. Strahlregler nach einem der Ansprüche 1 bis 15, **dadurch gekennzeichnet, dass** zumindest ein Durchflußloch (6) sich wenigstens in einem abströmseitigen Lochabschnitt zu seiner Abströmseite hin derart kegelförmig oder konisch erweitert, dass der aus dem Durchflußloch (6) austretende und durch die Kegelform oder die Konizität sich erweiternde Einzelstrahl oder Sprühstrahl sich im Gehäuseinnenraum vorzugsweise noch vor dem Auftreffen von Einzelstrahlen auf wenigstens ein im Gehäuseinnenraum angeordnetes Strahlformteil mit dem Einzelstahl wenigstens eines benachbarten Durchflussloches (6) durchmischt.

17. Strahlregler nach Anspruch 15 oder 16, **dadurch gekennzeichnet, dass** die Prallschräge (19) die Zuströmseite eines Wandungsabschnitts bildet, der als zumindest eine im Längsschnitt wellenförmige Einschnürung ausgebildet ist.

18. Strahlregler nach einem der Ansprüche 15 bis 17, **dadurch gekennzeichnet, dass** die Prallschrägen (19) am Gehäuseinnenumfang eines abströmseitigen Gehäuseteiles (27) einstückig angeformt ist und/oder dass die Lochplatte (5) in dem Gehäuseinnenraum eines zuströmseitigen Gehäuseteiles (26) einstückig eingeformt ist.

19. Strahlregler nach einem der Ansprüche 1 bis 18, **dadurch gekennzeichnet, dass** das Strahlreglergehäuse (2) mehrteilig ausgestaltet ist und zumindest zwei, vorzugsweise lösbar miteinander verbindbare Gehäuseteile (26, 27) hat.

20. Strahlregler nach einem der Ansprüche 1 bis 19, **dadurch gekennzeichnet, dass** die abströmseitige Stirnfläche des Strahlreglers (1) durch eine Netz- oder eine Wabenzellenstruktur (22) gebildet ist und dass die die abströmseitige Stirnfläche bildende Netz- oder Wabenzellenstruktur (22) entweder mit dem Strahlreglergehäuseteil (27) unlösbar verbunden und insbesondere einstückig angeformt oder durch ein in das Strahlreglergehäuse (2) einsetzbares Einlegeteil gebildet ist.

21. Strahlregler nach Anspruch 20, **dadurch gekennzeichnet, dass** die die abströmseitige Stirnfläche des Strahlreglers bildende Netz- oder Wabenzellenstruktur (22) durch Stege (25) gebildet ist, die sich zumindest in einem abströmseitigen Teilbereich in Strömungsrichtung verjüngen.

22. Strahlregler nach einem der Ansprüche 1 bis 21, **dadurch gekennzeichnet, dass** der Strahlregler (1, 10, 100) als belüfteter Strahlregler ausgestaltet ist, der zumindest eine Belüftungsöffnung (17) hat, die auf der Abströmseite der Lochplatte (5) im Gehäuseinnenraum mündet und die den Gehäuseinnenraum mit der Atmosphäre verbindet.

## Claims

1. Jet regulator (1) having a jet regulator housing, in the interior of which housing is provided a perforated plate (5) with a plurality of through-flow holes (6) for dividing the water which flows therethrough, wherein the perforated plate (5) has a central, non-perforated impingement surface (14) which is defined at least by an annular wall (15), wherein the annular wall (15) has passage openings (16) oriented in a radial direction, and, on the side of the passage openings (16) which is arranged in the impingement surface plane, there is provided in each case one through-flow hole (6), which is connected to the passage openings (16) and runs through the perforated plate (5), and the annular wall (15) is surrounded at an outer circumferential side by a ring-shaped annular chamber (29), **characterised in that**, upstream of or above the impingement surface (14) as viewed in a flow direction of the water, there is provided a throttle device (300) and/or a flow rate regulator (30) with a pass-through opening (31), and **in that** the impingement surface (14) has, within the first annular wall (15), a second annular wall (33) which is spaced apart radially from said first annular wall and which is of smaller diameter, wherein the jet regulator (1) is arranged in such a way that water coming from the throttle device (300) and/or the flow rate regulator (30) impinges upon the impingement surface (14) and fills the second annular wall (33) up to a height before it flows off radially into an intermediate space between the first annular wall (15) and the second annular wall (33) and then enters the through-flow holes (6) and flows off therethrough.

2. Jet regulator as claimed in claim 1, **characterised in that** the pass-through opening (31) has a preselected or predetermined pass-through cross-section which, in the case of the throttle device (300), determines the throttling action and/or, in the case of the flow rate regulator (30), can be set autonomously or automatically to a pass-through flow rate by a sealing ring (32) or O-ring which is located above the flow rate regulator (30) and which is deformable by means of water pressure.

3. Jet regulator as claimed in claim 1 or 2, **characterised in that** as viewed in the flow direction the second annular wall (33) is arranged downstream of or below the pass-through opening (31) in the radial direction outside the coaxial projection of this pass-through opening (31).

4. Jet regulator as claimed in any one of claims 1 to 3, **characterised in that** the second annular wall (33) has radial passage openings (34) arranged at a distance above the impingement surface (14) or has an edge (350) which extends in parallel with the impingement surface (14) and over which the water can flow.

5. Jet regulator as claimed in any one of claims 1 to 4, **characterised in that** the annular chamber (29) located outside the first annular wall (15) is constricted in its profile around the first annular wall (15) in regions, in such a way that regions which are relatively narrow in the radial direction and regions which are relatively wide in the radial direction alternate in a circumferential direction.

6. Jet regulator as claimed in any one of claims 1 to 5, **characterised in that**, on the outer side of the first annular wall (15), protrusions (36) are provided at least between individual ones or between all of the passage openings (16) arranged in this annular wall (15), said protrusions protruding in the radial direction into the annular chamber (29) outside the first annular wall and thus forming narrowed portions of this outer annular chamber (29).

7. Jet regulator as claimed in claim 6, **characterised in that** the passage openings (16) are arranged centrally between two adjacent protrusions (36), and in each case the protrusions (36) are preferably at the same distance from a passage opening (16) adjacent thereto.

8. Jet regulator as claimed in claim 6 or 7, **characterised in that** all of the protrusions (36) have corresponding dimensions and forms.

9. Jet regulator as claimed in any one of claims 6 to 8, **characterised in that** the protrusions (36) on the outer side of the first annular wall (15) are connected thereto without joints or in particular in an integral manner and project beyond the first annular wall (15) preferably in the axial direction counter to the flow direction of the supplied water.

10. Jet regulator as claimed in any one of claims 6 to 9, **characterised in that** the protrusions (36) which act as backing-up elements for the water passing over the first annular wall (15) take up approximately one third of the radial dimension or width of the outer annular chamber (29) in the radial direction and are preferably angled, or optionally rounded, at their end remote from the first annular wall (15).

11. Jet regulator as claimed in any one of claims 1 to 10, **characterised in that** the lower edges (35) of the radial passage openings (34) arranged in the second annular wall (33) at an axial distance above the impingement surface (14), or the upper edge (350) of the second annular wall (33), is/are arranged at the same height as or higher than the upper delimitation (37) of the passage openings (16) in the first annular wall (15).

12. Jet regulator as claimed in any one of claims 1 to 11, **characterised in that** the lower edges (35) of the passage openings (34) in the second annular wall (33) or the upper edge (350) of the second annular wall (33) and/or the upper delimitations (37) of the passage openings (16) in the first annular wall (15) are arranged in a common plane or two parallel planes lying at right angles with respect to the longitudinal central axis, and in particular extend in a planar fashion.

13. Jet regulator as claimed in any one of claims 2 to 12, **characterised in that** the sealing ring (32) or O-ring arranged on the flow rate regulator (30) in a groove (39) with the pass-through opening (31) is arranged above the second annular wall (33), in particular in parallel therewith, as viewed in the axial direction, **in that** the projection of the pass-through opening (31) onto the impingement surface (14) is arranged within the second annular wall (33), **in that** the radial dimension of the groove (39) which receives the sealing ring (32) or O-ring is in particular greater than that of the second annular wall (33), and **in that** the pass-through opening (31) is arranged in the particular region of the groove (39) which projects inwardly in the radial direction beyond the second annular wall (33), or **in that** the projections of the groove (39) with the sealing ring (32) or O-ring and the pass-through opening (31) onto the impingement surface (14) are arranged within the second annular wall (33).

14. Jet regulator as claimed in any one of claims 4 to 13, **characterised in that** the passage openings (34) provided on the second annular wall (33) each have lateral delimitations (35a) which end freely at the top counter to the flow direction of the supplied water, and **in that** these radial passage openings in the second annular wall (33) are closed off at the top by the underside of the flow rate regulator (30) or throttle device (300) lying thereon.

15. Jet regulator (1) having a jet regulator housing, in the interior of which housing is provided a perforated plate (5) with a plurality of through-flow holes (6) for dividing the water which flows therethrough, of which at least one through-flow hole (6), at least in an outflow-side hole portion, widens in a tapered or conical or stepped manner towards its outflow side, **characterised in that**, on the outflow side of the perforated plate (5) and at a distance from the latter, there is provided a circumferential impingement chamfer (19) which narrows the clear housing cross-section in this region progressively in the flow direction, wherein the jet regulator (1) is arranged in such a way that the water emerging from the through-flow holes (6) impinges upon the impingement chamfer (19).

16. Jet regulator as claimed in any one of claims 1 to 15, **characterised in that** at least one through-flow hole (6), at least in an outflow-side hole portion, widens in a tapered or conical manner towards its outflow side in such a way that the individual jet or spray jet which emerges from the through-flow hole (6), and which widens owing to the tapered shape or conicity, mixes in the housing interior with the individual jet of at least one adjacent through-flow hole (6), preferably before individual jets impinge on at least one jet-forming part arranged in the housing interior.

17. Jet regulator as claimed in claim 15 or 16, **characterised in that** the impingement chamfer (19) forms the inflow side of a wall portion which is formed as at least one constriction which undulates as viewed in longitudinal section.

18. Jet regulator as claimed in any one of claims 15 to 17, **characterised in that** the impingement chamfers (19) are formed integrally on the housing inner circumference of an outflow-side housing part (27) and/or **in that** the perforated plate (5) is formed integrally in the housing interior of an inflow-side housing part (26).

19. Jet regulator as claimed in any one of claims 1 to 18, **characterised in that** the jet regulator housing (2) is formed in multiple parts and has at least two housing parts (26, 27) which can be connected to one another preferably in a detachable manner.

20. Jet regulator as claimed in any one of claims 1 to 19, **characterised in that** the outflow-side end surface of the jet regulator (1) is formed by a mesh or honeycomb structure (22), and **in that** the mesh or honeycomb structure (22) forming the outflow-side end surface is either non-detachably connected to, and in particular formed integrally on, the jet regulator housing part (27) or is formed by an inlay part which can be inserted into the jet regulator housing (2).

21. Jet regulator as claimed in claim 20, **characterised in that** the mesh or honeycomb structure (22) forming the outflow-side end surface of the jet regulator is formed by webs (25) which narrow in the flow direction, at least in an outflow-side sub-region.

22. Jet regulator as claimed in any one of claims 1 to 21, **characterised in that** the jet regulator (1, 10, 100) is configured as an aerated jet regulator which has at least one aeration opening (17) which opens out in the housing interior on the outflow side of the perforated plate (5) and which connects the housing interior to the atmosphere.

## Revendications

1. Régulateur de jet (1) avec un corps de régulateur de jet, dans l'espace intérieur de corps duquel il est prévu une plaque perforée (5) avec une multiplicité de trous d'écoulement (6) destinés à diviser le courant d'eau, dans lequel la plaque perforée (5) présente une face d'impact centrale non perforée (14), qui est entourée au moins par une paroi annulaire (15), dans lequel la paroi annulaire (15) présente des ouvertures de passage (16) orientées en direction radiale et il est prévu sur le côté des ouvertures de passage (16) disposé dans le plan de la face d'impact respectivement un trou d'écoulement (6) raccordé aux ouvertures de passage (16) par la plaque perforée (5) et la paroi annulaire (15) est entourée à sa périphérie extérieure par une chambre annulaire (29) de forme annulaire, **caractérisé en ce qu'**il est prévu avant ou au-dessus de la face d'impact (14) dans la direction d'écoulement de l'eau un dispositif d'étranglement (300) et/ou un régulateur de débit (30) avec une ouverture de passage (31), et **en ce que** la face d'impact (14) présente une deuxième paroi annulaire (33) de plus petit diamètre à l'intérieur de la première paroi annulaire (15) et espacée radialement de celle-ci, dans lequel le régulateur de jet (1) est conçu de telle manière que l'eau arrivant du dispositif d'étranglement (300) et/ou du régulateur de débit (30) frappe la face d'impact (14) et remplisse la deuxième paroi annulaire (33) jusqu'à une hauteur, avant de s'écouler radialement dans une chambre intermédiaire entre la première paroi annulaire (15) et la deuxième paroi annulaire (33) et d'entrer ensuite dans les trous d'écoulement (6) et de s'écouler à travers ceux-ci.

2. Régulateur de jet selon la revendication 1, **caractérisé en ce que** l'ouverture de passage (31) présente une section transversale de passage présélectionnée ou prédéterminée, qui par le dispositif d'étranglement (300) détermine l'effet d'étranglement et/ou par le régulateur de débit (30) est réglable de façon spontanée ou automatique à un débit de passage par un anneau d'étanchéité (32) ou un joint torique déformable au moyen de la pression de l'eau et se trouvant au-dessus du régulateur de débit (30).

3. Régulateur de jet selon la revendication 1 ou 2, **caractérisé en ce que** la deuxième paroi annulaire (33) est placée, en considérant la direction d'écoulement, derrière ou en dessous de l'ouverture de passage (31) en direction radiale à l'extérieur de la projection coaxiale de cette ouverture de passage (31).

4. Régulateur de jet selon l'une quelconque des revendications 1 à 3, **caractérisé en ce que** la deuxième paroi annulaire (33) présente des ouvertures de passage radiales (34) disposées à distance au-dessus de la face d'impact (14) ou un bord (350) s'étendant parallèlement à la face d'impact (14) et pouvant être débordé par l'eau.

5. Régulateur de jet selon l'une quelconque des revendications 1 à 4, **caractérisé en ce que** la chambre annulaire (29) se trouvant à l'extérieur de la première paroi annulaire (15) a son tracé autour de la première paroi annulaire (15) rétréci localement de telle manière que des zones plus étroites et plus larges en direction radiale alternent en direction périphérique:

6. Régulateur de jet selon l'une quelconque des revendications 1 à 5, **caractérisé en ce qu'**il est prévu sur le côté extérieur de la première paroi annulaire (15) des saillies (36) au moins entre certaines ou entre toutes les ouvertures de passage (16) disposées dans cette paroi annulaire (15), qui pénètrent en direction radiale dans la chambre annulaire (29) à l'extérieur de la première paroi annulaire et forment ainsi des rétrécissements de cette chambre annulaire extérieure (29).

7. Régulateur de jet selon la revendication 6, **caractérisé en ce que** les ouvertures de passage (16) sont disposées au milieu entre deux saillies voisines (36) et les saillies (36) se trouvent à distance, respectivement de préférence à la même distance, d'une ouverture de passage (16) qui leur est voisine.

8. Régulateur de jet selon la revendication 6 ou 7, **caractérisé en ce que** toutes les saillies (36) présentent des dimensions et des formes concordantes.

9. Régulateur de jet selon l'une quelconque des revendications 6 à 8, **caractérisé en ce que** les saillies (36) sur le côté extérieur de la première paroi annulaire (15) sont reliées à celle-ci sans joint et en particulier d'une seule pièce et dépassent la première paroi annulaire (15) de préférence en direction radiale à l'opposé de la direction d'écoulement de l'eau fournie.

10. Régulateur de jet selon l'une quelconque des revendications 6 à 9, **caractérisé en ce que** les saillies (36) agissant comme éléments d'accumulation pour l'eau passant par-dessus la première paroi annulaire (15) occupent environ un tiers de la dimension radiale ou de la largeur de la chambre annulaire extérieure (29) et sont de préférence chanfreinées ou éventuellement arrondies à leur extrémité détournée de la première paroi annulaire (15).

11. Régulateur de jet selon l'une quelconque des revendications 1 à 10, **caractérisé en ce que** les bords inférieurs (35) des ouvertures de passage radiales (34) disposées dans la deuxième paroi annulaire (33) avec une distance axiale au-dessus de la face d'impact (14) ou le bord supérieur (350) de la deuxième paroi annulaire (33) est/sont disposé(s) à la même hauteur ou plus haut que la limite supérieure (37) des ouvertures de passage (16) dans la première paroi annulaire (15).

12. Régulateur de jet selon l'une quelconque des revendications 1 à 11, **caractérisé en ce que** les bords inférieurs (35) des ouvertures de passage (34) dans la deuxième paroi annulaire (33) ou le bord supérieur (350) de la deuxième paroi annulaire (33) et/ou les limites supérieures (37) des ouvertures de passage (16) dans la première paroi annulaire (15) se trouvent dans un plan commun ou dans deux plans parallèles situés perpendiculairement à l'axe longitudinal central et s'étendent en particulier de façon plane.

13. Régulateur de jet selon l'une quelconque des revendications 2 à 12, **caractérisé en ce que** l'anneau d'étanchéité (32) ou le joint torique disposé sur le régulateur de débit (30) sans une rainure (39) avec l'ouverture de passage (31) est disposé, en considérant la direction axiale, au-dessus de la deuxième paroi annulaire (33), en particulier de façon parallèle à celle-ci, **en ce que** la projection de l'ouverture de passage (31) sur la face d'impact (14) est disposée à l'intérieur de la deuxième paroi annulaire (33), **en ce qu'**en l'occurrence la dimension radiale de la rainure (39) contenant l'anneau d'étanchéité (32) ou le joint torique est en particulier plus grande que celle de la deuxième paroi annulaire (33) et **en ce que** l'ouverture d'écoulement (31) est disposée dans cette même région de la rainure (39) qui dépasse en direction radiale vers l'intérieur la deuxième paroi annulaire (33), ou **en ce que** la projection de la rainure (39) avec l'anneau d'étanchéité (32) ou le joint torique et l'ouverture de passage (31) sur la face d'impact (14) est disposée à l'intérieur de la deuxième paroi annulaire (33).

14. Régulateur de jet selon l'une quelconque des revendications 4 à 13, **caractérisé en ce que** les ouvertures de passage (34) prévues sur la deuxième paroi annulaire (33) présentent respectivement des limitations latérales (35a), qui se terminent librement vers le haut à l'opposé de la direction d'écoulement de l'eau fournie, et **en ce que** ces ouvertures de passage radiales dans la deuxième paroi annulaire (33) sont fermées vers le haut par le côté inférieur du régulateur de débit (30) situé au-dessus ou du dispositif d'étranglement (300) situé au-dessus.

15. Régulateur de jet (1) avec un corps de régulateur de jet, dans l'espace intérieur de corps duquel il est prévu une plaque perforée (5) avec une multiplicité de trous d'écoulement (6) destinés à diviser le courant d'eau, parmi lesquels au moins un trou d'écoulement (6) s'évase en forme de cône ou sous forme conique ou en forme de gradins au moins dans une partie du trou côté sortie vers son côté de sortie, **caractérisé en ce qu'**il est prévu sur le côté de sortie de la plaque perforée (5) à distance de celle-ci une rampe d'impact périphérique (19), qui rétrécit de façon croissante dans la direction d'écoulement la section transversale libre du corps dans cette région, dans lequel le régulateur de jet (1) est conçu de telle manière que l'eau sortant des trous d'écoulement (6) frappe la rampe d'impact (19).

16. Régulateur de jet selon l'une quelconque des revendications 1 à 15, **caractérisé en ce qu'**au moins un trou d'écoulement (6) s'évase en forme de cône ou en forme conique au moins dans une partie de trou côté sortie vers son côté de sortie, de telle manière que le jet unique ou le jet pulvérisé sortant du trou d'écoulement (6) et évasé par la forme conique ou la conicité se mélange avec le jet unique d'au moins un trou d'écoulement voisin (6) dans l'espace intérieur du corps encore avant l'impact de jets uniques sur au moins une partie de formation de jet disposée dans l'espace intérieur du corps.

17. Régulateur de jet selon la revendication 15 ou 16, **caractérisé en ce que** la rampe d'impact (19) forme le côté d'entrée d'une partie de paroi, qui est réalisée sous la forme d'une restriction ondulée en coupe longitudinale.

18. Régulateur de jet selon une des revendications 15 à 17, **caractérisé en ce que** la rampe d'impact (19) est formée d'une seule pièce à la périphérie intérieure de corps d'une partie de corps du côté sortie (27) et/ou **en ce que** la plaque perforée (5) est formée d'une seule pièce dans l'espace intérieur de corps d'une partie de corps du côté entrée (26).

19. Régulateur de jet selon l'une quelconque des revendications 1 à 18, **caractérisé en ce que** le corps du régulateur de jet (2) est réalisé en plusieurs parties et au moins deux parties de corps (26, 27) peuvent être assemblées l'une à l'autre, de préférence de façon séparable.

20. Régulateur de jet selon l'une quelconque des revendications 1 à 19, **caractérisé en ce que** la face frontale côté sortie du régulateur de jet (1) est formée par une structure en treillis ou en nid d'abeilles (22) et **en ce que** la structure en treillis ou en nid d'abeilles (22) formant la face frontale est soit assemblée de façon inséparable et en particulier d'une seule pièce à la partie de corps (27) du régulateur de débit soit formée par une pièce rapportée insérable dans le corps de régulateur de débit (2).

21. Régulateur de jet selon la revendication 20, **caractérisé en ce que** la structure en treillis ou en nid d'abeilles (22) formant la face frontale côté sortie du régulateur de débit est formée par des nervures (25), qui s'amincissent dans la direction d'écoulement au moins dans une région partielle côté sortie.

22. Régulateur de jet selon l'une quelconque des revendications 1 à 21, **caractérisé en ce que** le régulateur de jet (1, 10, 100) est réalisé sous la forme d'un régulateur de jet aéré, qui présente au moins une ouverture d'aération (17), qui débouche dans l'espace intérieur du corps sur le côté de sortie de la plaque perforée (5) et qui relie l'espace intérieur du corps à l'atmosphère.
